# EUROPÄISCHE PATENTANMELDUNG

(11) **EP 4 296 308 A1**
(43) Veröffentlichungstag der Anmeldung: **27.12.2023**
(21) Anmeldenummer: 22180877.7
(22) Anmeldetag: 24.06.2022
(51) Int. Cl.: C08K 5/372

(54) **BITUMENHALTIGE MISCHUNGEN, VERFAHREN ZU DEREN HERSTELLUNG UND DEREN VERWENDUNG**

(71) Anmelder: LANXESS Deutschland GmbH, 50569 Köln (DE)
(72) Erfinder: KLEIN, Thomas, 69126 Heidelberg (DE); HORSTMANN, Sandra, 67141 Neuhofen (DE); KUSTERER, Svenja, 76661 Rheinsheim (DE)

(57) **Zusammenfassung**

Die vorliegende Erfindung betrifft neue bitumenhaltige Mischungen, Verfahren zu deren Herstellung und deren Verwendung.

## Beschreibung

Die vorliegende Erfindung betrifft neue bitumenhaltige Mischungen, Verfahren zu deren Herstellung und deren Verwendung.

### Stand der Technik

Bitumen ist ein wichtiges Bindemittel im Asphalt, welches zusammen mit Gesteinskörnungen im Straßenbau für Fahrbahnbefestigungen, im Hochbau für Bodenbeläge, im Wasserbau und aber auch im Deponiebau zur Abdichtung verwendet wird.

Beim Straßenbau mit dem üblichen Heißeinbau setzt das erhitzte Bitumen Emissionen (Dämpfe, Aerosole) frei, deren Menge von der Zusammensetzung des Bitumens und der Temperatur abhängt. Bei den emittierten Gasen handelt es sich mehrheitlich um Alkane und Alkene, leichtere Aromaten (Benzol, Toluol, Ethylbenzol, Xylol). Weiterhin finden sich, abhängig vom Bitumen bzw. dessen Erdöl-Basis, dort z.B. 0,1-5% schwefelhaltige Kohlenwasserstoffe (Volatile Emissions from Hot Bitumen Storage Tanks, Francois Deygout, SHELL Bitumen, published online 1 June 2010 in Wiley Online Library DOI 10.1002/ep.10444). Je höher die Temperatur des Asphalts beim Straßenbau umso höher sind auch die Konzentrationen der freigesetzten Dämpfe und Aerosole. Als Faustregel kann gelten, dass eine Absenkung der Temperatur um 10K zu einer Halbierung der Emissionen führt; so ergibt sich bei einer Absenkung von 30K eine Energieersparnis von 9 kWh pro Tonne Asphaltmischgut (Asphalt-Leitfaden "Temperatur-abgesenkte Asphalte" des Deutschen Asphalt-Verbandes, April 2009, S. 7 von 52).

Der Ausschuss für Gefahrstoffe in Deutschland hat einen Arbeitsplatzgrenzwert in Höhe von 1,5 mg/m³ für Dämpfe und Aerosole bei der Heißverarbeitung von Bitumen verabschiedet.

Sowohl aus Gründen des Gesundheits- wie auch des Umweltschutzes ist es also anzustreben, die Temperatur des heißen Asphalts beim Straßenbau so gering wie technisch möglich zu halten. Schlüsselelement hierbei ist das Bitumen, über das in der Regel die Verarbeitungstemperatur des Asphalts steuerbar ist.

Dies kann einerseits durch mineralische Zusätze wie etwa Zeolithe, die durch die Freisetzung von Wasserdampf Schaumbitumen bilden, oder durch die Viskosität reduzierende "chemische" Zusätze, wie etwa Amine oder auch Wachse, im Bitumen erreicht werden (Shell Bitumen Handbook, 6th Ed, S 406). Diese Zusätze haben allerdings Nachteile. So verbraucht die Freisetzung von Wasserdampf aus den mineralischen Zusätzen Wärmeenergie; Amine als Zusätze sind Gefahrstoffe mit erheblicher aquatischer Toxizität und Wachse führen durch Kristallisation bei tiefen Temperaturen zu Brüchigkeit (Value-Added Opportunities for Conventional and Atypical Asphalt Binders and Asphaltenes Derived from Alberta Oil Sands in Road Construction, Alberta Innovates File Al 2515, Public Final Report, Submitted on: January 15, 2021).

Eine Alternative dazu könnten die Glyceride, vorzugsweise die Triglyceride, sein, z.B. in Kombination mit Fettsäuren, so wie diese in WO 2016/073442 als Bitumen-Ersatzstoff oder als Hilfsstoff zur Verbesserung der Löslichkeit eines Polymers beschrieben wurden. Nachteilig hierbei ist allerdings deren geringe Effektivität.

In EP-A 3262083 werden durch Schwefelung polymerisierte Öle aus erneuerbaren Rohstoffen für den Straßenbau beschrieben. Dabei wurden Öle oder Ester aus erneuerbaren Rohstoffen mit einem Schwefelgehalt von 0,001 von 8 Gew.% genutzt. Nachteilig hierbei ist ebenfalls die geringe Effektivität der Triglyceride.

### Aufgabe der vorliegenden Erfindung

Ausgehend vom oben beschriebenen Stand der Technik bestand die Aufgabe der vorliegenden Erfindung darin, verbesserte bitumenhaltige Mischungen mit entsprechend leistungsfähigeren Additiven bereitzustellen, mit denen die Verarbeitungstemperatur des heißen Asphalts beim Straßenbau so gering wie möglich gehalten werden kann.

Überraschenderweise wurde gefunden, dass diese Aufgabe gelöst werden kann, mit einer Mischungen enthaltend neben Bitumen mindestens eine geschwefelte C₅ - C₃₀-Fettsäure und/oder deren Ester mit monofunktionellen C₁ - C₈-Alkoholen mit einem Schwefel-Gehalt von 1 bis 29 Gew.% und mit einem Anteil an Di- und/oder Triglyceriden ≤ 5 Gew.%.

### Gegenstand der Erfindung

Gegenstand der vorliegenden Erfindung sind Mischungen enthaltend Bitumen und mindestens eine geschwefelte C₅ - C₃₀-Fettsäure und/oder mindestens einen C₁ - C₈-Alkylester aus geschwefelter Fettsäure und monofunktionellem C₁ - C₈-Alkohol mit einem Schwefel-Gehalt von 1 bis 29 Gew.% und einem Anteil an Di- und/oder Triglyceriden ≤ 5 Gew.%.

Die Funktion des Bitumens, das etwa 4-7% des Straßenbelags ausmacht, ist die eines Bindemittels für das Gestein. Durch dieses Bindemittel bekommt Asphalt inneren Zusammenhalt. Es ist daher von hoher Bedeutung, da das Bitumen mit hoher Bindungskraft an der Gesteinsoberfläche haftet.

Bitumen bezeichnet ein sowohl natürlich vorkommendes als auch durch Destillation aus Erdöl gewonnenes Gemisch aus verschiedenen organischen Stoffen. Aufgrund der biologischen Herkunft besteht Bitumen hauptsächlich aus Kohlenstoff und Wasserstoff. Es ist ein schwer flüchtiges, dunkelfarbiges Vielstoffgemisch organischer Substanzen, dessen viskoelastisches Verhalten sich mit der Temperatur ändert.

Bitumen im Sinne der Erfindung kann jede Art von Bitumen oder bituminösem Material sein. Zum Beispiel kann es Bitumen umfassen, das in der Natur vorkommt, Bitumen, das bei der Verarbeitung von Rohöl und / oder anderen schweren Kohlenwasserstoffen gewonnen wird oder auch Bitumen, das synthetisch hergestellt wird. Als Bitumen im Sinne der Erfindung sind alle handelsüblichen Bitumenarten, wie z.B. Straßenbaubitumen der Typen 50/70 oder 70/100 einsetzbar. Dies umfasst vorzugsweise Straßenbaubitumen nach DIN EN 12591.

Das Bitumen kann beispielsweise bei 60°C eine Viskosität von ca. 30-500 Pa*s, gemessen nach DIN EN 12596, haben. Das Bitumen kann zudem vorzugsweise eine Penetration bei 25°C von etwa 20-220 (in Einheiten 0,1 mm) aufweisen, gemessen nach DIN EN 1426, einem Standardprüfverfahren für das Eindringen von bituminösen Materialien (Institut für Straßenwesen Uni Siegen, Lehrunterlagen Straßenbautechnik Teil 1, 2018).

Bei der geschwefelten C₅ - C₃₀-Fettsäure im Sinne der Erfindung handelt es sich vorzugsweise um aliphatische Monocarbonsäuren aus Triglyceriden, die aus natürlichen Ölen wie Palmöl, Sonnenblumenöl, Maisöl, Sojaöl, Leinsamenöl, Rapsöl, Tungöl, Rizinusöl, Tallöl, Baumwollsamenöl, Erdnusöl, Distelöl, und/oder Maisstillageöl gewonnen wurden, und die durch Umsetzung mit elementarem Schwefel und gegebenfalls Schwefelwasserstoff geschwefelt wurden. Die Umsetzung mit elementarem Schwefel und gegebenfalls Schwefelwasserstoff erfolgt dabei vorzugsweise bei Temperaturen von 120°C bis 180°C.

Bei dem C₁ - C₈-Alkylester aus geschwefelter Fettsäure und monofunktionellem C₁ - C₈-Alkohol handelt es sich vorzugsweise um geschwefelte Umsetzungsprodukte von den zuvor genannten Fettsäuren aus Palmöl, Sonnenblumenöl, Maisöl, Sojaöl, Leinsamenöl, Rapsöl, Tungöl, Rizinusöl, Tallöl, Baumwollsamenöl, Erdnusöl, Distelöl, und/oder Maisstillageöl, mit Methanol und/oder Ethanol. Die Herstellung der C₁ - C₈-Alkylester erfolgt vorzugsweise bei Temperaturen von >40°C.

In einer besonders bevorzugten Ausführungsform der Erfindung handelt es sich bei der geschwefelten C₅ - C₃₀-Fettsäure und/oder deren Ester mit monofunktionellem C₁ - C₈-Alkohol um Verbindungen der Formel (I) 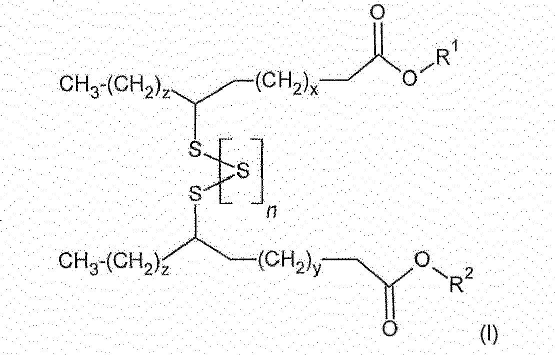 mit
n = 0-8,
R¹ = H, C₁-C₈-Alkyl, vorzugsweise C₁ - oder Cz - Alkyl,
R² = H, C₁-C₈-Alkyl, vorzugsweise C₁- oder C₂ - Alkyl,
x = 0-10, vorzugsweise 4-6,
y = 0-10, vorzugsweise 4-6 und
z = unabhängig voneinander 0-20, vorzugsweise 7-9,
   und/oder (II) 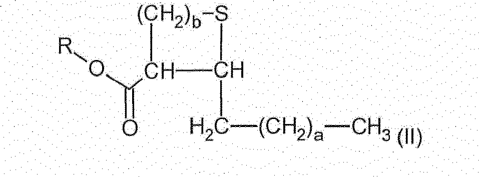 mit
a = 0 - 26, vorzugsweise 10 -14,
b = 0 - 3, vorzugsweise 0 und
R = H, C₁-C₈-Alkyl, vorzugsweise C₁ - oder C₂ - Alkyl.

Bei dem C₁ - C₈-Alkylester aus geschwefelter Fettsäure und monofunktionellem C₁ - C₈-Alkohol im Sinne der Erfindung handelt es sich besonders bevorzugt um Methyl- bzw. Ethylester, und ganz besonders bevorzugt um Methylester.

Bevorzugt ist der Einsatz von geschwefelten C₁ - C₈-Alkylestern, vorzugsweise geschwefelten Methylestern aus Fettsäuren pflanzlichen oder tierischen Ursprungs, wie beispielsweise Ölsäure.

Sofern geschwefelte C₅ - C₃₀ -Fettsäure und/oder deren Ester mit monofunktionellem C₁ - C₈-Alkohol gemeinsam eingesetzt werden, ist ein Verhältnis von 50 : 50 bis 10 : 90 bevorzugt.

Der Schwefel-Gehalt in der geschwefelten C₅ - C₃₀ -Fettsäure und/oder in deren Ester mit monofunktionellem C₁ - C₈-Alkohol beträgt vorzugsweise 9 - 29 Gew.%, besonders bevorzugt 10 bis 27 Gew.%, ganz besonders bevorzugt 10 - 20 Gew.%, bezogen auf die geschwefelte C₅ - C₃₀ -Fettsäure und/oder deren Alkylestern.

Des Weiteren ist bevorzugt, dass in der geschwefelten C₅ - C₃₀-Fettsäure und/oder deren Ester mit monofunktionellem C₁ - C₈-Alkohol der Anteil an Di- und/oder Triglyceriden < 0,8 Gew. %, besonders bevorzugt zwischen 0,001 und 0,75 Gew. %, bezogen auf die Fettsäure bzw. deren Alkylester beträgt.

In einer weiteren bevorzugten Ausführungsform der vorliegenden Erfindung weisen die geschwefelte C₅ - C₃₀-Fettsäure und/oder deren Ester mit monofunktionellem C₁ - C₈-Alkohol als Zahlenmittel der Molmasse Mn einen Wert von < 880 g mol⁻¹, besonders bevorzugt zwischen 350 und 750 g mol⁻¹, besonders bevorzugt von 450 bis 680 g mol⁻¹ auf. Die Angaben zur zahlenmittleren Molmasse Mn beziehen sich auf eine Messung mittels Gelpermeationschromatographie (GPC) bei 40°C unter Verwendung eines RI-Detektors mit Tetrahydrofuran (THF) als Eluent und mit der Säulenkombination "PSS-SDV" des Lieferanten PSS als stationäre Phase (Molekulargewichtsbereich zwischen 100 bis 10.000 g/mol; Säulenlänge 300 mm; Säulendurchmesser 8 mm; Partikelgröße 5 µm; Porengröße 100, 500 und 10000 Å), die mit Polystyrolstandards kalibriert wurde.

Die Menge an geschwefelter Fettsäure und/oder an deren Ester mit monofunktionellem C₁ - C₈-Alkohol im Bitumen beträgt vorzugsweise 0,01 - 25 Gew%, vorzugsweise 1 - 10 Gew%.

In einer weiteren Ausführungsform der vorliegenden Erfindung enthält das eingesetzte Bitumen vulkanisiertes Gummi, vorzugsweise aus geschredderten Reifen, welches vorzugsweise vor dem Einmischen in die erfindungsgemäße Mischung mit Dialkylpolysulfiden der Formel (III)
R³-S_{d}-R⁴ (III) behandelt wurde, wobei R³ und R⁴ gleich oder verschieden sein können und für einen linearen oder verzweigten C₁-C₁₈-Alkylrest stehen und für die Zahlen von 3 bis 12, vorzugsweise 8 steht. In einer weiteren Ausführungsform der Erfindung sind als Dialkylpolysulfid der Formel (III) Dioctylpentasulfid und/oder Dioctyltetrasulfid bevorzugt, besonders bevorzugt Dioctylpentasulfid und/oder Dioctyltetrasulfid, dessen C8-Alkyl verzweigt ist.

Das Dialkylpolysulfid wird bezogen auf das vulkanisierte Gummi in einer Menge von vorzugsweise 1,5 bis 3 Gew.%, besonders bevorzugt 1,7 bis 2,5 Gew.% eingesetzt.

Bei dem vulkanisierten Gummi handelt es sich um Schwefel-vernetzte Kautschuke auf Basis von Polydienen der R-Gruppe, umfassend Naturkautschuke (NR), Butadien-Kautschuke (BR), StyrolButadien-Kautschuke (SBR), Acrylnitril-Butadien-Kautschuke (NBR) und Butylkautschuke (IIR), um Vulkanisate aus Kautschuken mit wenigen Doppelbindungen oder doppelbindungsfreien Polymerhauptketten aus der M-Gruppe, umfassend Ethylen-Propylen-Dien-Kautschuk (EPDM), und Mischungen aus den vorgenannten Kautschuken der R- und M-Gruppe. Besonders bevorzugt ist der Einsatz von Gummireifen als Quelle für das vulkanisierte Gummi.

Das vulkanisierte Gummi, vorzugsweise der Gummireifen, wird vorzugsweise in einer Partikelgröße von 0,15 bis 3 mm, besonders bevorzugt 0,2 - 1mm, eingesetzt. Hierzu kann es notwendig sein, das vulkanisierte Gummi zu zerkleinern. Dies erfolgt idealerweise mittels Schreddern und Mühlen und/oder Schneidwerkzeugen. Hierfür einsetzbar sind vorzugsweise 2-Wellenschredder und Schneidmühlen.

Bei der Behandlung des vulkanisierten Gummis mit den Dialkylpolysulfiden der Formel (III) wird das Gummi durch Aufbrechen der Schwefelbrücken devulkanisiert und dadurch die Löslichkeit im Bitumen verbessert. Die Behandlung erfolgt vorzugsweise bei Temperaturen von 130-150°C. Die dabei entstandene Mischung wird dann vorzugsweise für weniger als 20 Minuten getempert und anschließend dem Bitumen zugemischt.

Die Menge an Dialkylpolysulfid der Formel (III) für das Aufbrechen der Schwefelbrücken im vulkanisierten Gummi beträgt vorzugsweise 1,5 bis 3 Gew.%, besonders bevorzugt 1,7 bis 2,5 Gew.%, bezogen auf die Menge an vulkanisiertem Gummi.

Das Aufbrechen der Schwefelbrücken im vulkanisierten Gummi mit den Dialkylpolysulfiden der Formel (III) erfolgt vorzugsweise gemäß dem in EP-A-3771727 beschriebenen Verfahren. In einer weiteren bevorzugten Ausführungsform der Erfindung erfolgt die Dosierung des Dialkylpolysulfids in das vulkanisiertes Gummi dabei vorzugsweise über eine Düse.

Ein weiterer Gegenstand der vorliegenden Erfindung ist zudem ein Verfahren zur Herstellung der erfindungsgemäßen Mischung, wonach mindestens eine geschwefelte C₅ - C₃₀-Fettsäure und/oder deren Ester mit monofunktionellem C₁ - C₈-Alkohol mit einem Schwefel-Gehalt von 1 bis 29 Gew.%, vorzugsweise 8 - 29 Gew.%, besonders bevorzugt 10-27 Gew.% und ganz besonders bevorzugt 10-20 Gew.% und einem Anteil der Di- und/oder Triglyceriden ≤ 5 Gew.% und gegebenenfalls Dialkylpolysulfid der Formel (III) und vulkanisiertes Gummi bei Temperaturen von 100° bis 200 °C mit dem Bitumen vermischt werden.

In einer bevorzugten Ausführungsfom der Erfindung handelt es sich bei der geschwefelten C₅ - C₃₀-Fettsäure und/oder deren Ester mit monofunktionellem C₁ - C₈-Alkohol um Verbindungen der Formeln (I) und/oder (II).

Das Mischen erfolgt vorzugsweise unter mechanischer Beanspruchung. Mechanische Beanspruchung im Sinne der Erfindung bedeutet den Einsatz von Mischaggregaten, wie vorzugsweise Extruder, Innenmischer, Hochdruck-Homogenisatoren, wie insbesondere Hochschermischgeräte, wie z.B. Ultra-Turrax^{®}, Kneter und/oder Walzwerk. Im großtechnischen Bereich ist die Verwendung von Extrudern und/oder Innenmischern dabei besonders bevorzugt, wobei die Art des Extruders und/oder Innenmischers keiner besonderen Beschränkung unterliegt. Im Labormaßstab ist das Hochschermischgerät, z.B. ein Ultra-Turrax^{®}, besonders bevorzugt oder auch ein Ankerrührer mit mindestens 2 Flügeln.

### Weiterer Gegenstand der Erfindung

Ein weiterer Gegenstand der Erfindung sind Asphaltmischungen, enthaltend Gestein und die erfindungsgemäßen Mischungen.

Bei den Asphaltmischungen im Sinne der Erfindung handelt es sich um eine natürliche oder technisch hergestellte Mischung enthaltend Bitumen und Gestein (Gesteinskörnungen). Diese wird vorzugsweise im Straßenbau für Fahrbahnbefestigungen, im Hochbau für Bodenbeläge, im Wasserbau und im Deponiebau zur Abdichtung verwendet. Das Mischungsverhältnis liegt vorzugsweise bei 90-95 Gew.-% Gestein/ Gesteinskörnung und ca. 5-10 Gew.-% Bitumen. Dieses Verhältnis kann jedoch nach oben oder unten verändert werden. Die beigegebene Menge (sogenannter Bindemittelgehalt) und die Härte (also die Bindemittelsorte) des Bitumens verändern das Materialverhalten wesentlich.

Bei Gestein im Sinne der Erfindung handelt es sich vorzugsweise um natürliche Gesteinskörnungen, vorzugsweise gemäß DIN EN 13043, die vorzugsweise einer mechanischen Aufbereitung, wie beispielsweise Brechen und Absieben, unterzogen worden sind.

Gesteinskörnungen, die für Asphaltmischgut für den Bau von Verkehrsflächen eingesetzt werden, müssen den Anforderungen der DIN EN 13043 bzw. der TL Gestein-StB 04 entsprechen. Asphaltdeckschichtmischgut besteht beispielsweise aus Gesteinskörnungen bis zu einem Größtkorn von 16 mm.

Die Anforderungen an Gesteinskörnungen werden unter anderem in der DIN 18196 Bodenklassifikation für bautechnische Zwecke und den Technischen Lieferbedingungen für Gesteinskörnung im Straßenbau, TL Gestein-StB, Ausgabe 2004 (S. 11) definiert.

Das Gestein liegt dabei vorzugsweise entweder in ungebrochener Form (als Rundkorn), insbesondere als Kies, Sand, Schotter und Splitt; oder in gebrochener Form vor.

Die Menge an Gestein beträgt vorzugsweise bis zu 95 Gew. %, vorzugsweise 90 bis 95 Gew.%, bezogen auf die Gesamtmenge an Bitumen.

In Bezug auf die das in den erfindungsgemäßen Asphaltmischungen eingesetzte Bitumen sowie die geschwefelte C₅ - C₃₀-Fettsäure und/oder deren Ester mit monofunktionellem C₁ - C₈-Alkohol wird auf die obigen Ausführungen zu den erfindungsgemäßen Mischungen verwiesen.

In einer Ausführungsform enthält die erfindungsgemäße Asphaltmischung weitere Zusatzstoffe und/ oder Füllstoffe wie Fasermaterialien, oder Metallverbindungen/-salze, z. B. organische Zinkverbindungen/-salze die u.a. als Sulfidfänger und damit als Geruchsverminderer wirken.

In einer weiteren bevorzugten Ausführungsform der Erfindung weist die Asphaltmischung folgende Zusammensetzung auf:
Bitumen: 4-8 Gew.%,
Gestein: 80-96 Gew.%,
Geschwefelte C₅ - C₃₀-Fettsäure und/oder deren Ester mit monofunktionellem C₁ - C₈-Alkohol: 0,001- 2 Gew.%, vorzugsweise 0,1 bis 1 Gew. % und
gegebenenfalls weitere Zusatz- und/oder Füllstoffe: 0-20 Gew.% und
gegebenenfalls vulkanisiertes Gummi, welches vorzugsweise mit Dialkylpolysulfid der Formel (III) behandelt wurde, wobei die Summe der Bestandteile 100 Gew.% beträgt.

Ein weiterer Gegenstand der vorliegenden Erfindung ist zudem ein Verfahren zur Herstellung der erfindungsgemäßen Asphaltmischungen, wonach mindestens die erfindungsgemäße Mischung bei Temperaturen von 100° bis 200 °C mit dem Gestein vermischt wird. Das Dialkylpolysulfid der Formel (III) wird vorzugsweise in einem getrennten Schritt dem Gummi zugesetzt, bevor das so behandelte Gummi mit dem Bitumen vermischt wird.

In einer bevorzugten Ausführungsfom der Erfindung handelt es sich bei der geschwefelten C₅ - C₃₀-Fettsäure und/oder dem C₁ - C₈-Alkylester aus geschwefelter Fettsäure mit monofunktionellem C₁ - C₈-Alkohol um Verbindungen der Formeln (I) und/oder (II).

Das Mischen erfolgt vorzugsweise unter mechanischer Beanspruchung. Mechanische Beanspruchung im Sinne der Erfindung bedeutet den Einsatz von Mischaggregaten, wie vorzugsweise Extruder, Innenmischer, Hochdruck-Homogenisatoren, wie insbesondere Hochschermischgeräte, wie z.B. Ultra-Turrax^{®}, Kneter und/oder Walzwerk. Im großtechnischen Bereich ist die Verwendung von Extrudern und/oder Innenmischern dabei besonders bevorzugt, wobei die Art des Extruders und/oder Innenmischers keiner besonderen Beschränkung unterliegt. Im Labormaßstab ist das Hochschermischgerät, z.B. ein Ultra-Turrax^{®}, besonders bevorzugt oder auch ein Ankerrührer mit mindestens 2 Flügeln.

Exemplarisch genannt sind nachfolgend Doppelschneckenextruder oder Planetwalzenextruder.

Die Rührgeschwindigkeit kann in Abhängigkeit von der Viskosität des gummimodifizierten Bitumens (GmB) eingestellt werden, bei einem Ankerrührer mit mindestens 2 Flügeln liegt die Rührgeschwindigkeit vorzugsweise bei 150 rpm bis 500 rpm, besonders bevorzugt 180-250 rpm.

Ein weiterer Gegenstand der vorliegenden Erfindung ist die Verwendung der erfindungsgemäßen Asphaltmischung im Straßenbau als Bindemittel für die Gesteinskörnungen im Asphalt, vorzugsweise als Straßen belag.

Ein weiterer Gegenstand vorliegenden Erfindung ist die Verwendung von Mischungen enthaltend Bitumen und mindestens eine geschwefelte C₅ - C₃₀-Fettsäure und/oder deren Ester mit monofunktionellem C₁ - C₈-Alkohol mit einem Schwefel-Gehalt von 1 bis 29 Gew.%, vorzugsweise 8 - 29 Gew.%, besonders bevorzugt 10-27 Gew.% und ganz besonders bevorzugt 10-20 Gew.% und einem Anteil der Di- und/oder Triglyceriden ≤ 5 Gew.% zur Reduzierung der Verarbeitungstemperatur von Asphalt.

Die vorliegende Erfindung wird anhand der nachfolgenden Beispiele näher erläutert, wobei die vorliegende Erfindung keinesfalls auf die Beispiele beschränkt ist.

### Versuchsbeispiele:

Es wurden dabei folgende Mischungen verwendet:
**Straßenbaubitumen des Typs 50/70** der Firma Shell AG.
**Asphaltmischgut des Typs AC 11 D S :** Asphaltbeton mit Gestein des Ryolith-Typs (Quarzporphyr) mit oberer Korngröße 11 mm für eine Deckschicht (D) mit schwerer Beanspruchung (S))
**Als geschwefelte Additive:**
   **Additiv 1) Geschwefelter Methylester von Rapsfettsäure:** S-Gehalt: 17 Gew.%, kinematische Viskosität: 55 mm²/s bei 40°C, Di- /Triglyceride ≤ 1 Gew.%, Zahlenmittel der Molmassen Mn ~ 600 g mol⁻¹ ,
   **Additiv 2) Geschwefeltes Palmöl:** S-Gehalt: 6 Gew.%, Triglycerid-Gehalt: >90 Gew.% kinematische Viskosität: 250 mm²/s bei 40°C, hergestellt im Labor gemäß der Lehre von EP-A-3262083, Zahlenmittel der Molmassen Mn ~ 890 g mol⁻¹,
   **Additiv 3) Geschwefeltes Rapsöl:** S-Gehalt: 15 Gew.%, Triglycerid-Gehalt: >90 Gew.% kinematische Viskosität: 300 mm²/s bei 40°C, Zahlenmittel der Molmassen Mn ~ 890 g mol⁻¹ , **Additiv 4) Geschwefelte Ölsäure:** S-Gehalt: 15%, Di-/Triglycerid-Gehalt: <1 Gew.%, kinematische Viskosität: 500 mm²/s bei 40°C, Zahlenmittel der Molmassen Mn ~490 g mol⁻¹

Die Bestimmung der zahlenmittleren Molmasse Mn erfolgte durch eine Messung mittels Gelpermeationschromatographie (GPC) bei 40°C unter Verwendung eines RI-Detektors mit Tetrahydrofuran (THF) als Eluent und mit der Säulenkombination "PSS-SDV" des Lieferanten PSS als stationäre Phase (Molekulargewichtsbereich zwischen 100 bis 10.000 g/mol; Säulenlänge 300 mm; Säulendurchmesser 8 mm; Partikelgröße 5 µm; Porengröße 100, 500 und 10000 Å), die mit Polystyrolstandards kalibriert wurde.

### Beispiel 1: Testung mittels Bitumen-Typisierungs-Schnell-Verfahren (BTSV)

In den folgenden Versuchen wurden unterschiedliche Additive in unterschiedlichen Anteilen Straßenbaubitumen des Typs 50/70 zugegeben und mittels Bitumen-Typisierungs-Schnell-Verfahren (BTSV) getestet. Das BTSV-Verfahren ermöglicht eine Differenzierung von modifizierten und nichtmodifizierten Bitumen im oberen Bereich der Gebrauchstemperatur. Die zwei Schlüsselparameter des BTSV sind die Temperatur T'BTSV,' für die der komplexe Schermodul G* = 15 kPa beträgt, sowie der dazugehörige Phasenwinkel δ'BTSV'.

Die Messungen wurden gemäß der Europäische Prüfnorm EN 14770 durchgeführt allerdings nicht wie dort beschrieben nicht unter isothermen Bedingungen, sondern so, dass bei Temperatur von 20°C bis 90°C während der Messung stetig erhöht wird (ΔT = 1,2 K/min, Unterschied zum EP RuK mit 5K/min). Die oszillierende Deformation ist auf die Frequenz 1,59 Hz festgelegt.

Die Herstellung der Mischungen erfolgte dabei wie folgt: In den folgenden Versuchen wurden die vorgenannten geschwefelten Additive 1) und 3) in den in der Tabelle angegeben Anteilen dem Straßenbaubitumen des Typs 50/70 zugegeben. Hierzu wurde das Bitumen Typs 50/70 auf 170°C erhitzt, unter Rühren das entsprechende, in der Tabelle aufgeführte Additiv zugegeben und 20 Minuten nachgerührt. Die Ergebnisse sind in Tabelle 1 aufgeführt.

**Tabelle 1: BTSV Messungen von additivierten Bitumina im Vergleich**

| **Bitumen Variante** 50/70 + Additiv | T'BTSV' in °C | ö'BTSV' |
|---|---|---|
| Ohne Additiv (V) | 54,7 | 83,1 |
| 3 % **Additiv 1:** geschwefelter Methylester von Rapsfettsäure, S-Gehalt: 17 Gew.%, Di-/Triglyceride ≤ 1 Gew.%. (erf.) | 48,1 | 82,9 |
| 6 % **Additiv 1:** geschwefelter Methylester von Rapsfettsäure, S-Gehalt: 17 Gew.%, Di-/Triglyceride ≤ 1 Gew.%. (erf.) | 41,9 | 82,8 |
| 3 % **Additiv 3:**geschwefeltes Rapsöl (S-Gehalt 15 Gew.%, Di-/Triglyceride: >90 Gew.% (V) | 50,3 | 84,2 |

| | | |
|---|---|---|
| erf. = erfindungsgemäß, V = Vergleichsbeispiel | | |

Wie aus den Beispielen ersichtlich, senken erfindungsgemäßen Mischungen die T'BTSV' deutlich ab und sind hervorragend geeignet, die Verarbeitungstemperatur des heißen Asphalts zu senken. Weiterhin ist festzuhalten, dass der Phasenwinkel δ'BTSV' für Straßenbaubitumen einen typischen Wert von ca. 83° annimmt.

### Beispiel 2: Ermittlung von Verdichtungstemperatur, Raumdichte und Marshall-Verdichtungstemperatur

Die Ermittlung von Verdichtungstemperatur und Raumdichte und daraus die daraus extrapolierte Marshall-Verdichtungstemperatur für die Raumdichte 2,302 [g/cm³] erfolgte gemäß den Technischen Prüfbedingungen (TP) Asphalt-StB , FGSV-Nr. 756, Teil 30: Herstellung von Marshall-Probekörpern mit dem Marshall-Verdichtungsgerät (MVG) sowie dem "Merkblatt für die Temperaturabsenkung bei Asphalt", Ausgabe 2011 der FGSV (Forschungsgemeinschaft für Straßen- und Verkehrswesen). Für diese Tests wurde ein Asphaltmischgut des Typs AC 11 D S (was einem Asphaltbeton mit Korngröße des Gesteins 11mm für Deckschichten mit schwerer Beanspruchung entspricht) und als Bindemittel wurde Straßenbaubitumen des Typs 50/70 oder dessen wie oben beschrieben mit Additiven versetzte Varianten eingesetzt. Als Verdichtungstemperaturen wurden 100°C, 110°C, 135°C und 150°C gewählt, wobei 135°C als Referenz für die Verdichtung ohne Additiv verwendet wurde. Jede Probekörperseite wurde 50 Verdichtungsschlägen ausgesetzt. Die Ergebnisse sind in der Tabelle 2 aufgeführt.

**Tabelle 2:**

| **Asphaltmischgut des** Typs AC 11 D S mit Bitumen 50/70 | **Verdichtungs-temperatur [°C]** | **Raumdichte [g/cm³]** | **Marshall Verdichtungs-Temperatur in °C für Raumdichte 2,302 [g/cm³]** |
|---|---|---|---|
| ohne Additiv (V) | 135 | 2,302 | 135 |
| + 3 Gew.% **Additiv 1** = geschwefelter Methylester von Rapsfettsäure (S-Gehalt 17 Gew.%), Di-/Triglyceride ≤ 1 Gew.%. (erf.) | 100 | 2,297 | 103 |
| | 110 | 2,311 | |
| | 135 | 2,325 | |
| | 150 | 2,329 | |
| + 3 Gew.% **Additiv 3** = geschwefeltes Rapsöl (15% S), Di-/Triglyceride: >90 Gew.% (V) | 100 | 2,279 | 121 |
| | 110 | 2,290 | |
| | 135 | 2,317 | |
| | 150 | 2,317 | |
| +3 Gew.% **Additiv 2** = **geschwefeltes Palmöl** (S-Gehalt: 6%) Di-/Triglyceride: >90% (V) | 100 | 2,292 | 120 |
| | 110 | 2,290 | |
| | 135 | 2,313 | |
| | 150 | 2,325 | |
| + 3 Gew.% **Additiv 4 =** geschwefelte Ölsäure 15 Gew.% S, Di-/Triglycerid-Gehalt: <1 Gew.% (erf.) | 100 | 2,291 | 112 |
| | 110 | 2,300 | |
| | 135 | 2,327 | |
| | 150 | 2,329 | |

| | | | |
|---|---|---|---|
| erf. = erfindungsgemäß, V = Vergleichsbeispiel | | | |

Wie ersichtlich, ist der temperaturabsenkende Effekt bei der Verdichtung bei Verwendung der erfindungsgemäß eingesetzten geschwefelten Methylester von Rapsfettsäure und geschwefelter Ölsäure sehr ausgeprägt. Hier werden Absenkungen von > 30 K (geschwefeltem Methylester) bzw. > 20 K (geschwefelte Ölsäure) erzielt, bei geschwefeltem Rapsöl und Palmöl ist der Effekt bei ansonsten gleicher Dosierung nur etwa halb so groß. Aus dem Einsatz der erfindungsgemäßen Mischungen resultiert für eine Asphaltmischung eine erhebliche Verminderung der Emissionen und damit eine Verbesserung des Gesundheitsschutzes beim Straßenbau.

## Patentansprüche

1. Mischungen enthaltend Bitumen und mindestens eine geschwefelte C₅ - C₃₀-Fettsäure und/oder deren Ester mit monofunktionellem C₁ - C₈-Alkohol mit einem Schwefel-Gehalt von 1 bis 29 Gew.% und einem Anteil an Di- und/oder Triglyceriden ≤ 5 Gew.%.

2. Mischungen nach Anspruch 1, **dadurch gekennzeichnet, dass** diese als geschwefelte Fettsäure und/oder deren Ester Verbindungen der Formel (I) 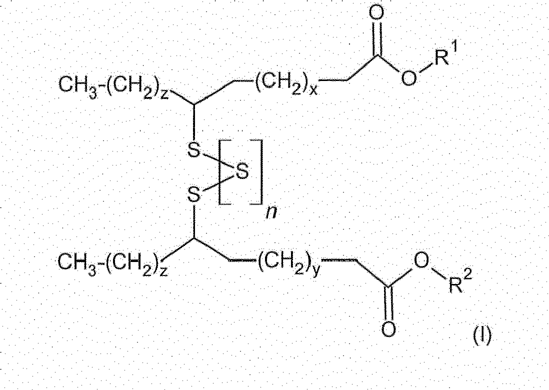 mit
n = 0 - 8,
R¹ = H, C₁-C₃-Alkyl,
R² = H, C₁-C₃-Alkyl,
x =0 - 10,
y =0 -10,
z = unabhängig voneinander 0 - 20
und/oder der Formel (II) 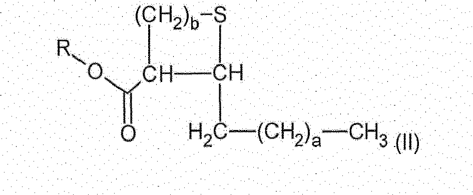 mit
a = 0 - 26,
b = 0-3 und
R = H, C₁-C₈-Alkyl enthalten.

3. Mischungen nach Anspruch 1 oder 2, **dadurch gekennzeichnet, dass** es sich bei der geschwefelten C₅ - C₃₀-Fettsäure um aliphatische Monocarbonsäuren aus Triglyceriden handelt, die aus natürlichen Ölen wie Palmöl, Sonnenblumenöl, Maisöl, Sojaöl, Leinsamenöl, Rapsöl, Tungöl, Rizinusöl, Tallöl, Baumwollsamenöl, Erdnusöl, Distelöl, und/oder Maisstillageöl gewonnen wurden, und die durch Umsetzung mit elementarem Schwefel und gegebenfalls Schwefelwasserstoff geschwefelt wurden .

4. Mischungen nach einem der Ansprüche 1 bis 3, **dadurch gekennzeichnet, dass** der Schwefelanteil in der geschwefelten C₅ - C₃₀-Fettsäure und/oder deren Ester mit monofunktionellem C₁ - C₈-Alkohol 8 - 29 Gew.%, bevorzugt 10-27 Gew.% und besonders bevorzugt 10-20 Gew.% beträgt.

5. Mischungen nach einem der Ansprüche 1 bis 4, **dadurch gekennzeichnet, dass** die geschwefelte C₅ - C₃₀- Fettsäure und/oder deren Ester mit monofunktionellem C₁ - C₈-Alkohol ein Zahlenmittel der Molmasse Mn von < 880 g mol⁻¹, besonders bevorzugt zwischen 350 und 750 g mol⁻¹, besonders bevorzugt von 450 bis 680 g mol⁻¹, aufweisen.

6. Mischungen nach einem der Ansprüche 1 bis 5, **dadurch gekennzeichnet, dass** der Anteil der Di- und/oder Triglyceriden 0,001 und 0,75 Gew. %, bezogen auf die geschwefelte C₅ -C₃₀- Fettsäure und/oder deren Ester mit monofunktionellem C₁ - C₈-Alkohol, beträgt.

7. Mischungen nach einem der Ansprüche 1 bis 6, **dadurch gekennzeichnet, dass** in diese vulkanisiertes Gummi eingerührt wurde, welches vor dem Einmischen mit Dialkylpolysulfiden der Formel (III)
R³-S_{d}-R⁴(III) behandelt, wobei R³ und R⁴ gleich oder verschieden sein können und für einen linearen oder verzweigten C₁-C₁₈-Alkylrest stehen und d für die Zahlen 3 bis 12 steht.

8. Verfahren zur Herstellung der Mischung nach einem der Ansprüche 1 bis 7, **dadurch gekennzeichnet, dass** Bitumen mit mindestens einer geschwefelten C₅ - C₃₀-Fettsäure und/oder deren Ester mit monofunktionellem C₁ - C₈-Alkohol mit einem Schwefel-Gehalt von 8 bis 29 Gew.% und einem Anteil der Di- und/ oder Triglyceriden ≤ 5 Gew.% und gegebenenfalls Dialkylpolysulfid der Formel (III) und vulkanisiertes Gummi bei Temperaturen von 100° bis 200°C vermischt werden.

9. Asphaltmischung, enthaltend Gestein und Mischungen nach einem der Ansprüche 1 bis 7.

10. Verfahren zur Herstellung der Asphaltmischung nach Anspurch 9, **dadurch gekennzeichnet, dass** mindestens eine Mischung nach einem der Ansprüche 1 bis 7 bei Temperaturen von 100° bis 200 °C mit dem Gestein vermischt werden.

11. Verwendung der Mischung nach einem der Ansprüche 1 bis 8 im Straßenbau und als Straßenbelag.

12. Verwendung von Mischungen nach einem der Ansprüche 1 bis 8 zur Reduzierung der Verarbeitungstemperatur von Asphalt.
